# EUROPÄISCHE PATENTSCHRIFT

(11) **EP 0 645 285 B1**
(45) Veröffentlichungstag und Bekanntmachung des Hinweises auf die Patenterteilung: **04.06.1997**
(21) Anmeldenummer: 94111956.2
(22) Anmeldetag: 01.08.1994
(51) Int. Cl.: B60R 25/00, G06F 1/00

(54) **Diebstahlschutz-Verfahren für Fahrzeuge mit zwei Steuergeräten, die Informationen austauschen**
Anti-theft protection method for vehicle with two control devices which exchange information
Procédé de protection anti-vol pour véhicules avec deux appareils de commande qui échangent des informations

(30) Priorität: 23.09.1993 DE 4332413
(43) Veröffentlichungstag der Anmeldung: 29.03.1995
(73) Patentinhaber: Bayerische Motoren Werke Aktiengesellschaft, 80788 München (DE)
(72) Erfinder: Hohenner, Hans, D-80331 München (DE)

(56) Entgegenhaltungen:
- EP-A- 0 249 028
- EP-A- 0 355 475
- EP-A- 0 464 320
- WO-A-90/10292
- WO-A-93/05987
- DE-A- 3 613 605
- DE-A- 4 008 536

## Beschreibung

Die Erfindung bezieht sich auf ein Diebstahlschutz-Verfahren für Fahrzeuge mit zwei Steuergeräten, die Informationen austauschen.

Die Erfindung beschäftigt sich mit dem Problem, den Diebstahlschutz eines Kraftfahrzeugs auch dann sicherzustellen, wenn ein Steuergerät oder möglicherweise sogar zwei Steuergeräte ausgetauscht werden. Es ist hierzu aus der WO 93/05987 bekannt, den möglichen Austausch dadurch zu erschweren, daß die Steuergeräte einen eigenen Identifikations-Code besitzen und über einen Datenbus miteinander verbunden sind. Ein Informationsaustausch wird dadurch zwischen dieser Steuergeräten möglich. Falls eines der Steuergeräte ausgetauscht wird, besitzt das ersetzte keinen Identifikations-Code (null-code) oder im Falle eines gebrauchten Steuergeräts einen Identifikations-Code, der in beiden Fällen nicht mit dem des ausgetauschten Steuergeräts übereinstimmt. Da die übrigen Steuergeräte dieses fremde Steuergerät nicht erkennen (keine Synchronisierung), wird das Gesamtsystem funktionsunfähig.

Die Erfindung geht von folgenden Überlegungen aus: zwei Steuergeräte sollen dergestalt zusammenwirken, daß sie sich wechselseitig Informationen liefern und ein ordnungsgemäßer Betrieb des einen Steuergeräts davon abhängig ist, ob die vom anderen Steuergerät gelieferte Information der erwarteten Information entspricht. Beispielsweise wird von dem einen Steuergerät, z.B. dem für das Antriebsmanagement zuständigen, eine Rohinformationen in Form eines Zahlenwerts an das andere Steuergerät, beispielsweise ein Diebstahlsicherungsgerät, geliefert, das bei ordnungsgemäßer Funktion einen Wert zurückgibt, der durch Multiplikation des ausgegebenen Werts mit einem vorgegebenen Faktor gebildet ist. Stimmt der zurückgegebene Wert mit dem erwarteten Wert überein, erzeugt das Steuergerät für sich und/oder das andere Steuergerät ein Freigabesignal, wonach eine Inbetriebnahme des Kraftfahrzeugs möglich ist. Die Wirksamkeit der beschriebenen Diebstahlsicherungsmaßnahme setzt voraus, daß sich die beiden Steuergeräte "kennen", d.h. das eine Steuergerät weiß, in welcher Weise die ausgegebene Rohinformation durch das andere Steuergerät verändert wird.

Probleme ergeben sich dann, wenn eines der beiden Steuergeräte, beispielsweise durch einen nicht berechtigten Benutzer des Kraftfahrzeugs ausgetauscht wird oder aber wenn beide Steuergeräte in einem anderen Fahrzeug übernommen werden. Im ersten Fall entspricht die zurückgegebene Prüfinformation nicht der erwarteten mit der Folge, daß auch bei berechtigtem Austausch eines Steuergeräts die Inbetriebnahme des Kraftfahrzeugs grundsätzlich unmöglich wird. Im zweiten Fall wäre die Inbetriebnahme des Kraftfahrzeugs sofort möglich, da die erwartete Prüfinformation mit der zurückgegebenen übereinstimmt. Diese Situation ist besonders deshalb problematisch, da ein gleichzeitiger Austausch zweier Steuergeräte mit hoher Wahrscheinlichkeit nur durch einen unberechtigten Benutzers des Kraftfahrzeugs vorgenommen wird.

Der Erfindung liegt die Aufgabe zugrunde, ein Verfahren zu schaffen, bei dem zwei Steuergeräte synchronisiert werden können, nachdem eines oder beide Steuergeräte ausgetauscht wurden, und bei dem die Inbetriebnahme des Kraftfahrzeugs für einen unberechtigten Benutzer nach Austausch einer oder beider Steuergeräte möglichst erschwert ist.

Die Erfindung löst diese Aufgabe durch die kennzeichnenden Merkmale des Patentanspruchs 1.

Bei der Erfindung erfolgt im synchronisierten Zustand ein Zusammenwirken der beiden Steuergeräte, indem sie Informationen austauschen und insbesondere durch das zweite Steuergerät die aufgenommene Rohinformation als Prüfinformation an das erste Steuergerät zurückgegeben wird. Da diese mit der erwarteten Prüfinformation übereinstimmt, ist eine Inbetriebnahme und der Betrieb des Kraftfahrzeugs jederzeit möglich.

Wurde hingegen eines der oder beide Steuergeräte ausgetauscht, so ist mit diesem Austausch auch ein zumindest kurzzeitiger Abfall der Betriebsspannung verbunden. Die dann von dem ersten Steuergerät ausgegebene Rohinformation -im Falle des vorhergehenden Austausches dieses Steuergeräts- bzw. die vom zweiten Steuergerät zurückgegebene Prüfinformation unterscheidet sich bei der erstmaligen Inbetriebnahme von der jeweils üblichen Information nach Inbetriebnahme. Damit wird für das die Information vom anderen Steuergerät empfangende Steuergerät erkennbar, daß dieses ausgetauscht bzw. ohne Spannungsversorgung war. Durch eine in jedem der beiden Steuergeräte vorgesehene Zeitschaltung wird ein erneuter Informationsaustausch erst nach Ablauf der vorgegebenen Zeitdauer möglich gemacht. Die Zeitdauer ist so bemessen, daß sie für den unberechtigten Benutzer unangenehm lange ist, für denjenigen, der berechtigter Weise einen Austausch eines der beiden oder beider Steuergeräte vornimmt, jedoch noch erträglich ist. Ein typischer Wert hierfür beträgt 10 min.

Nach Ablauf dieser Zeitdauer wird ein erneuter Initialisierungsvorgang vorgenommen. Die erneute Initialisierung kann auch selbsttätig vorgenommen werden. Durch das dann richtige Zusammenspiel der beiden Steuergeräte wird das Freigabesignal für das erste Steuergerät selbst oder von diesem für das zweite Steuergerät erzeugt und die Inbetriebnahme der beiden Steuergeräte und damit des Kraftfahrzeugs möglich. Selbstverständlich ist es auch möglich, die zweite Initialisierung willkürlich vorzunehmen. Dies kann beispielsweise während eines zweiten Startversuchs für das Kraftfahrzeug erfolgen. Wesentlich dabei ist, daß dann die vorgegeben Zeitdauer abgelaufen ist.

Um insbesondere für den unberechtigten Benutzer die Benutzung des Kraftfahrzeugs weiter zu erschweren, kann mit jedem vorzeitigen Versuch einer Initialisierung die Verlängerung der für den Ablauf der vorgenannten Sperrzeit maßgeblichen Zeitdauer verschoben werden. Durch eine entsprechende Beschaltung kann erreicht werden, daß die erfolgreiche Initialisierung erst nach ungestörtem Ablauf der vorgegebenen Zeitdauer von, wie vorhin angegeben beispielsweise 10 min., möglich ist. Damit wird bei einer Folge von Initialisierungsversuchen, die insbesondere auf einen unberechtigten Benutzer hindeuten, die Inbetriebnahme des Kraftfahrzeugs durch eine entsprechend spätere Festlegung des Zeitpunkts für die tatsächliche Inbetriebnahme des Kraftfahrzeugs erschwert.

## Patentansprüche

1. Diebstahlschutz-Verfahren für Fahrzeuge mit zwei Steuergeräten, die Informationen austauschen, gekennzeichnet durch folgende Verfahrensschritte:
a) im synchronisierten Zustand gibt das erste Steuergerät eine Rohinformation an das zweite Steuergerät auf und das zweite Steuergerät gibt eine daraus gewonnene Prüfinformation an das erste Steuergerät zurück
b) das erste Steuergerät erzeugt bei Übereinstimmen der zurückgegebenen Prüfinformation mit der erwarteten Prüfinformation ein Freigabesignal
c) bei der erstmaligen Inbetriebnahme wenigstens eines der beiden Steuergeräte liefert dieses eine charakteristische Information, die sich von den sonstigen ausgegebenen Informationen unterscheidet und
d) ein erneuter Informationsaustausch ist erst nach Ablauf einer vorgegebenen Zeitdauer initiierbar.

2. Verfahren nach Anspruch 1, dadurch gekennzeichnet, daß die Initialisierung des erneuten Informationsaustausches selbsttätig vorgenommen wird.

3. Verfahren nach Anspruch 1 oder 2, dadurch gekennzeichnet, daß bei jedem Versuch der Initialisierung vor Ablauf der vorgegebenen Zeitdauer die Zeitdauer für die Durchführung des erneuten Informationsaustausches gegenüber der vorgegebenen Zeitdauer verlängert wird.

## Claims

1. An antitheft method for vehicles with two control devices which exchange information, characterised by the following steps of the method:
a) in a synchronised state the first control device provides raw information to the second control device and the second control device returns check information derived therefrom to the first control device;
b) the first control device generates a release signal if the returned check information corresponds to the expected check information;
c) upon start-up for the first time at least one of the two control devices delivers a characteristic information which differs from the other output information; and
d) a renewed information exchange can only be initiated after the elapse of a pre-determined time period.

2. A method according to claim 1, characterised in that the initialisation of the renewed information exchange is carried out automatically.

3. A method according to claim 1 or 2, characterised in that upon each attempt at initialisation before elapse of the pre-determined time period, the time required for carrying out the new information exchange is extended relative to the pre-determined time period.

## Revendications

1. Procédé de protection contre le vol de véhicules comportant deux appareils de commande échangeant des informations,
caractérisé en ce qu'
il comporte les étapes suivantes :
a) à l'état synchronisé, le premier appareil de commande envoie une information brute au second appareil qui lui renvoie une information de contrôle établie à partir de celle reçue,
b) le premier appareil de commande délivre un signal de libération si l'information de contrôle coïncide avec celle attendue,
c) lors de la première mise en service d'au moins un des deux appareils de commande, celui-ci délivre une information caractéristique distincte des autres informations délivrées,
d) un nouvel échange d'informations ne peut être initialisé qu'après écoulement d'un délai prédéterminé.

2. Procédé selon la revendication 1,
caractérisé en ce que l'initialisation du nouvel échange d'informations s'effectue automatiquement.

3. Procédé selon la revendication 1 ou 2,
caractérisé en ce qu'
à chaque essai d'initialisation effectué avant écoulement du délai prédéterminé, le délai relatif à l'exécution d'un nouvel échange d'informations est allongé par rapport au délai précédent.
